# EUROPEAN PATENT SPECIFICATION

(11) **EP 4 508 476 B1**
(45) Date of publication and mention of the grant of the patent: **11.11.2026**
(21) Application number: 22946508.3
(22) Date of filing: 27.09.2022
(51) Int. Cl.: G02B 13/00, G02B 13/18, G02B 9/62

(54) **IMAGE-SPACE TELECENTRIC OPTICAL LENS AND SPECTRAL CAMERA COMPRISING THE SAME**
TELEZENTRISCHES OPTISCHES BILDRAUMOBJEKTIV UND SPEKTRALKAMERA DAMIT
LENTILLE OPTIQUE TÉLÉCENTRIQUE D'ESPACE D'IMAGE ET CAMÉRA SPECTRALE LA COMPRENANT

(30) Priority: 13.06.2022 WO PCT/CN2022/098463
(43) Date of publication of application: 19.02.2025
(73) Proprietor: Huawei Technologies Co., Ltd., Shenzhen, Guangdong 518129 (CN)
(72) Inventor: AYRAS, Pekka, 00180 Helsinki (FI); JUHOLA, Mikko, 33720 Tampere (FI); LU, Jianlong, Shenzhen, Guangdong 518129 (CN)
(74) Representative: MERH-IP Matias Erny Reichl Hoffmann Patentanwälte PartG mbB
(86) International application number: PCT/CN2022/121593
(87) International publication number: WO 2023/240836

(56) References cited:
- WO-A1-2021/014992
- CN-A- 110 058 387
- CN-A- 112 649 940
- CN-B- 111 522 132
- CN-U- 205 809 394
- CN-U- 207 216 120
- CN-U- 208 833 995
- JP-A- 2013 007 872
- US-A1- 2020 319 437

## Description

### CROSS-REFERENCE TO RELATED APPLICATION

The present application claims priority from International Patent Application No. PCT/CN2022/098463, filed on June 13, 2022, entitled "SPECTRAL CAMERA LENS".

### TECHNICAL FIELD

The present disclosure relates generally to the field of spectral cameras. In particular, the present disclosure relates to an optical lens having an image-space telecentric design, as well as to a spectral camera comprising the optical lens.

### BACKGROUND

The advantages of sensor technology and the emergence of new user applications create a need for spectral or hyperspectral cameras built into mobile user devices (e.g., mobile phones). Although mobile applications for the spectral cameras have not yet been created, their possible examples could include, but not limited to, material recognition and classification, food maturity and condition, skin color recognition, light source recognition, etc.

To be integrated into a mobile phone, a spectral camera should be as small as possible. At the same time, the length of the spectral camera in the direction of an optical axis is an important limiting factor. On the other hand, it is desirable that the spectral camera has a large field of view (FOV) and a large-sized image sensor.

Image sensors usually come with different methods for band selection. The band selection can be done, for example, by using absorptive filters or interference-based filters. The latter are usually represented by thin-film filters and Fabry-Perot filters. The advantage of the interference-based filters is that their design and manufacture are well-established, and their transmission bands are generally broader compared to the absorptive filters. At the same time, the intrinsic problem of the interference-based filters is pass band (or rejection band) position movement (in a wavelength space) as function of an angle of incidence. The problem is pronounced at large FOVs. It is known that the transmission band of the interference-based filters moves to shorter wavelengths when the angle of incidence increases from normal incidence. To solve this problem, it has been proposed to use the so-called image-space telecentric optical lens in the spectral camera, which allows providing a chief ray angle close to 0° over the whole image area.

However, for image-space telecentric optical lenses to be efficiently used in the spectral cameras of the mobile user devices, they should meet at least the following performance requirements: a small size; a large FOV and no band movement at large FOV angles (i.e., at the edges of an image); a large depth of focus without the need for autofocus; a wavelength range larger than in traditional mobile phone cameras (e.g., for some ultraviolet (UV) and/or infrared (IR) applications). These requirements make the lens design more challenging.

CN111522132B discloses a visible near-infrared broad-spectrum complex achromatic image square telecentric lens and applications thereof. The optical lens is a transmissive optical system having a coaxial structure, and all of the lenses within the optical system are of the spherical face type.

WO2021/014992A1 discloses an imaging lens consisting of a positive first lens group, an aperture, and a positive second lens group.

CN205809394U discloses a short-wave infrared wide-band complex achromatic image square telecentric telescopic objective lens.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide an image-space telecentric optical lens that may be efficiently used in spectral cameras of mobile user devices (e.g., mobile phones).

The objective above is achieved by the features of the independent claims in the appended claims. Further embodiments and examples are apparent from the dependent claims, the detailed description and the accompanying drawings.

According to a first aspect, an optical lens is provided. The optical lens comprises a first lens group and a second lens group. The first lens group is arranged along an optical axis of the optical lens and comprises at least one aspherical lens element. The second lens group is arranged after the first lens group along the optical axis of the optical lens. The second lens group comprises a first aspherical lens element, a second aspherical lens element and a third aspherical lens element which are arranged in sequence along the optical axis of the optical lens. The first aspherical lens element and the second aspherical lens element are configured to correct a chromatic aberration of the optical lens. The third aspherical lens element is configured to refract chief rays substantially parallel to the optical axis of the optical lens. The first lens group has a total optical power higher than a total optical power of the second lens group. The first aspherical lens element has a negative focal length from -1.2 mm to -0.8 mm, a refractive index from 1.60 to 1.75, and an Abbe number from 17 to 25. The second aspherical lens element has a positive focal length from 2.1 mm to 2.5 mm, a refractive index from 1.50 to 1.60, and an Abbe number from 50 to 60. The third aspherical lens element has a positive focal length from 3.8 mm to 4.4 mm, a refractive index from 1.60 to 1.75, and an Abbe number from 15 to 30. The optical lens thus configured is image-space telecentric and may be suitable for use in a spectral camera to be integrated into a mobile user device (e.g., mobile phone).

In one exemplary embodiment of the first aspect, the first lens group and the second lens group are configured to operate within a range of light wavelengths from 400 nm to 850 nm. This may make the optical lens suitable for near-UV, visible and near-IR light-based mobile applications.

In one exemplary embodiment of the first aspect, the first lens group and the second lens group are configured such that the optical lens has an effective focal length equal to or less than 2.3 mm. The optical lens having such an effective focal length may be used in the spectral camera of a mobile user device more efficiently.

In one exemplary embodiment of the first aspect, the first lens group and the second lens group are configured such that the optical lens has a diagonal field of view from -40° to +40°. If the optical lens with the diagonal FOV equal to 80° is used in a spectral camera, the area (i.e., FOV) across which the spectral camera may image becomes much larger, thereby allowing one to take more efficient images containing more data/details and take fewer images in order to capture the entire object of interest.

In one exemplary embodiment of the first aspect, the first lens group and the second lens group are configured such that a ratio of a total track length to a full image diagonal is equal to or less than 1.3. The optical lens thus configured may provide an optimal tradeoff between the size of the optical lens and the height of an image to be captured by using the optical lens in the spectral camera.

In one exemplary embodiment of the first aspect, the at least one aspherical lens element of the first lens group comprises a first aspherical lens element having a positive focal length from 3 mm to 4 mm, a second aspherical lens element having a positive focal length from 5 mm to 10 mm, and a third aspherical lens element having a positive focal length from 5 mm to 10 mm. The first lens group thus configured may additionally correct the chromatic aberration of the optical lens, as well as efficiently correct other types of aberrations which may be present in the optical lens (e.g., a spherical aberration, a comatic aberration, an astigmatism aberration, a field curvature aberration, a distortion aberration, etc.).

In one exemplary embodiment of the first aspect, the optical lens further comprises an aperture stop located between the second aspherical lens element and the third aspherical lens element in the first lens group. With the aperture stop thus located, the optical lens may operate more efficiently in the spectral camera of the mobile user device.

In one exemplary embodiment of the first aspect, the first lens group and the second lens group are configured such that the optical lens has a f-number equal to or larger than 2.8. The optical lens having such a f-number may be used in the spectral camera of the mobile user device more efficiently.

According to a second aspect, a spectral camera is provided, which comprises the optical lens according to the first aspect and an image sensor. The image sensor is arranged after the optical lens along the optical axis of the optical lens. The spectral camera thus configured may be efficiently used in a mobile user device (e.g., mobile phone).

In one exemplary embodiment of the second aspect, the spectral camera further comprises a spectral filter arranged between the optical lens and the image sensor. The spectral filter may provide a desired spectral response (or, in other words, band selection).

In one exemplary embodiment of the second aspect, the spectral camera further comprises, in addition to the spectral filter between the optical lens and the image sensor, a spectral filter arranged directly on the image sensor. The combination of the spectral filters thus arranged may provide different desired spectral responses.

In one exemplary embodiment of the second aspect, the spectral filter arranged between the optical lens and the image sensor comprises at least one color filter (e.g., an absorptive filter, an interference-based filter, a metasurface color filter, a quantum dot color filter, or any combination thereof). These types of the spectral filters may provide more efficient band selection.

In one exemplary embodiment of the second aspect, each of the spectral filter arranged between the optical lens and the image sensor and the spectral filter arranged directly on the image sensor comprises at least one color filter (e.g., an absorptive filter, an interference-based filter, a metasurface color filter, a quantum dot color filter, or any combination thereof). These types of the spectral filters may provide more efficient band selection.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a schematic block diagram of an optical lens in accordance with one exemplary embodiment;
FIG. 2 shows a schematic block diagram of a spectral camera comprising the optical lens of FIG. 1 in accordance with one exemplary embodiment;
FIG. 3 shows how light rays are refracted by the optical lens of FIG. 1 in the spectral camera of FIG. 2;
FIGs. 4A-4B show dependences of a field curvature in millimeters and a F-Tan(Theta) distortion in percent on an object field angle for the optical lens of FIG. 1 at different light wavelengths; and
FIG. 5 shows dependences of the modulus of an Optical Transfer Function (OTF) on a spatial frequency in cycles/mm for the optical lens of FIG. 1 at different Image Field heights in mm.

### DETAILED DESCRIPTION

Various embodiments of the present disclosure are further described in more detail with reference to the accompanying drawings. However, the present disclosure may be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses disclosed herein may be implemented in practice by using any numbers of the embodiments provided herein. Furthermore, it should be understood that any embodiment of the present disclosure may be implemented using one or more of the features presented in the appended claims.

The word "exemplary" is used herein in the meaning of "used as an illustration". Unless otherwise stated, any embodiment described herein as "exemplary" should not be construed as preferable or having an advantage over other embodiments.

Any positioning terminology, such as "left", "right", "top", "bottom", "above" "below", "upper", "lower", "horizontal", "vertical", etc., may be used herein for convenience to describe one element's or feature's relationship to one or more other elements or features in accordance with the figures. It should be apparent that the positioning terminology is intended to encompass different orientations of the apparatus disclosed herein, in addition to the orientation(s) depicted in the figures. As an example, if one imaginatively rotates the apparatus in the figures 90 degrees clockwise, elements or features described as "left" and "right" relative to other elements or features would then be oriented, respectively, "above" and "below" the other elements or features. Therefore, the positioning terminology used herein should not be construed as any limitation of the invention.

Although the numerative terminology, such as "first", "second", etc., may be used herein to describe various embodiments, elements or features, these embodiments, elements or features should not be limited by this numerative terminology. This numerative terminology is used herein only to distinguish one embodiment, element or feature from another embodiment, element or feature. Thus, a first lens group discussed below could be called a second lens group, and vice versa, without departing from the teachings of the present disclosure.

According to the example embodiments disclosed herein, a mobile user device may refer to a mobile station, a mobile terminal, a mobile subscriber unit, a mobile phone, a cellular phone, a smart phone, a cordless phone, a personal digital assistant (PDA), a wireless communication device, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a smart meter/sensor, an unmanned vehicle (e.g., an industrial robot, a quadcopter, etc.), industrial manufacturing equipment, a global positioning system (GPS) device, an Internet-of-Things (IoT) device, an Industrial IoT (IIoT) device, a machine-type communication (MTC) device, a group of Massive IoT (MIoT) or Massive MTC (mMTC) devices/sensors, or any other suitable mobile device that a user can carry around. In some embodiments, the mobile user device may refer to at least two collocated and inter-connected mobile devices thus defined.

The exemplary embodiments disclosed herein relate to an image-space telecentric optical lens that may be efficiently used in spectral cameras of mobile user devices. More specifically, the optical lens comprises a first lens group and a second lens group. The first lens group is arranged along an optical axis of the optical lens and comprises at least one aspherical lens element. The second lens group is arranged after the first lens group along the optical axis of the optical lens. The second lens group comprises a first aspherical lens element, a second aspherical lens element and a third aspherical lens element which are arranged in sequence along the optical axis of the optical lens. The first and second aspherical lens elements of the second lens group are mainly intended to correct a chromatic aberration of the optical lens. The third aspherical lens element of the second lens group is configured to refract chief rays substantially parallel to the optical axis of the optical lens, thereby making the optical lens telecentric in an image space. The first lens group is assumed to have a total optical power higher than a total optical power of the second lens group. Furthermore, the second lens group is configured as follows:
- the first aspherical lens element has a negative focal length from -1.2 mm to -0.8 mm, a refractive index from 1.60 to 1.75, and an Abbe number from 17 to 25;
- the second aspherical lens element has a positive focal length from 2.1 mm to 2.5 mm, a refractive index from 1.50 to 1.60, and an Abbe number from 50 to 60; and
- the third aspherical lens element has a positive focal length from 3.8 mm to 4.4 mm, a refractive index from 1.60 to 1.75, and an Abbe number from 15 to 30.

It should also be noted that if, in the second lens group, the first aspherical lens element has a negative focal length of -1.08 mm, the second aspherical lens element has a positive focal length of 2.28 mm and the third aspherical lens element has a positive focal length of 4.12 mm, then an image diagonal equal to 3.8 mm may be provided by the optical lens. At the same time, those skilled in the art would recognize that the focal lengths of the aspherical lens elements of the second lens group (as well as the aspherical lens element(s) of the first lens group, if needed) may be scaled depending on particular applications. For example, if one needs to obtain the image diagonal equal to 4.18 mm (i.e., increased by 10%), then the preferred focal lengths of the aspherical lens elements of the second lens group should range from -1.32 mm to -0.88 mm (for the first aspherical lens element), from 2.31 mm to 2.75 mm (for the second aspherical lens element), and from 4.18 mm to 4.84 mm (for the third aspherical lens element) (i.e., the upper and lower limits of each of these ranges are also changed by 10%).

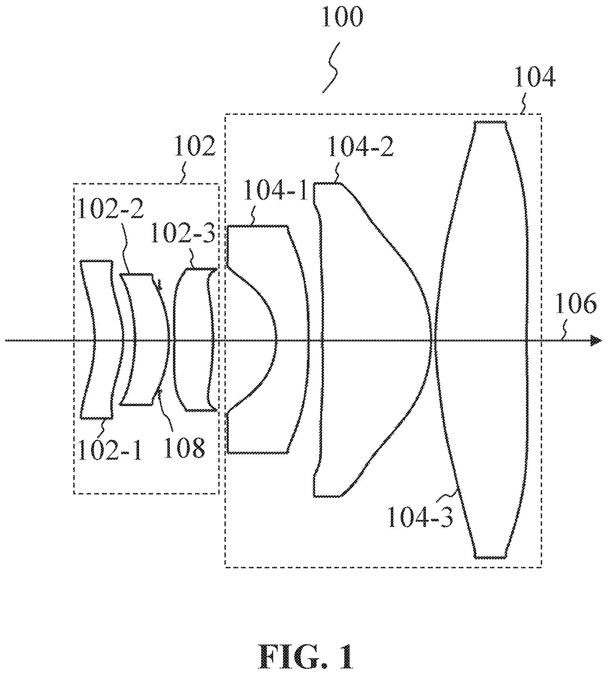

FIG. 1 shows a schematic block diagram of an optical lens 100 in accordance with one exemplary embodiment. The optical lens 100 comprises a first (left) lens group 102 and a second (right) lens group 104 arranged in sequence along an optical axis 106 of the optical lens 100. The first lens group 102 comprises a first aspherical lens element 102-1, a second aspherical lens element 102-2, and a third aspherical lens element 102-3, which are arranged in sequence along the optical axis 106 of the optical lens 100. The second lens group 102 comprises a first aspherical lens element 104-1, a second aspherical lens element 104-2, and a third aspherical lens element 104-3, which are arranged in sequence after the first lens group 102 along the optical axis 106 of the optical lens 100. The main function of the first and second aspherical lens elements 104-1 and 104-2 of the second lens group 104 is to correct a chromatic aberration that may be present in the optical lens 100, while the main function of the third aspherical lens element 104-3 of the second lens group 104 is to refract chief rays substantially parallel to the optical axis 106 of the optical lens 100. Given these functions, each of the first, second and third aspherical lens elements 104-1, 104-2 and 104-3 of the second lens group 104 may be configured to have a focal length, a refractive index and an Abbe number which fall within the above-indicated corresponding numerical ranges. As for the first lens group 102, the first, second and third aspherical lens elements 102-1, 102-2 and 102-3 are mainly configured to correct other types of aberrations which may be present in the optical lens 100 (although they can slightly correct the chromatic aberration as well). Those types of aberrations may include, but not limited to, third-order aberrations (also known as Seidel aberrations including spherical aberrations, comatic aberrations, astigmatism aberrations, field curvature aberrations, distortion aberrations, etc.) and higher-order (e.g., 5-th, 7-th, etc.) aberrations. The first, second and third aspherical lens elements 102-1, 102-2 and 102-3 should be configured to correct one or more of such aberrations, depending on particular applications and user preferences. Preferably, the first aspherical lens element 102-1 has a positive focal length from 3 mm to 4 mm, the second aspherical lens element 102-2 has a positive focal length from 5 mm to 10 mm, and the third aspherical lens element 102-3 has a positive focal length from 5 mm to 10 mm. The aspherical lens elements of the first and second lens groups 102 and 104 may be made of optical glass or transparent plastic or polymer by using any of the existing lens fabrication techniques, such as molding, cast molding, die molding, etc.

It should be noted that the number and shape of the aspherical lens elements constituting each of the first and second lens groups 102 and 104, which are shown in FIG. 1, are not intended to be any limitation of the present disclosure, but merely used to provide a general idea of how the aspherical lens elements may be implemented within the optical lens 100. For example, the first lens group 102 may be represented by a single aspherical lens element configured to correct one or more aberrations of interest. It is well-known that no lens element is perfect, and all lens elements cause different aberrations. Ideally, the sum of each aberration of all lens elements is zero. This can be thought of as each lens element of an optical lens is configured to cancel all the aberration(s) caused by the remaining lens elements of the optical lens. Thus, the first lens group 102 may have less or more than 3 aspherical lens elements, provided that the first lens group 102 will provide optimal correction of one or more aberrations caused by the aspherical lens elements of the second lens group 104. Similarly, the shape of the first and second aspherical lens elements 104-1 and 104-2 in the second lens group 104 should be selected such that the chromatic aberration of the optical lens is properly fixed. At the same time, the second lens group 104 preferably has at least three aspherical lens elements - if their number is less than 3, the deterioration of the lens performance is possible.

The first and second lens groups 102 and 104 may be also configured based on other desired lens parameters. In other words, the aspherical lens elements of the first and second lens groups 102 and 104 may be shaped to obtain desired lens parameters. For example, the first lens group 102 and the second lens group 104 may be configured to operate within a range of light wavelengths from 400 nm to 850 nm (this range of operational wavelengths is preferred, and it may be also extended but at the expense of the performance of the optical lens 100). Additionally or alternatively, the first lens group 102 and the second lens group 104 may be configured such that the optical lens 100 has an effective focal length equal to or less than 2.3 mm and/or a f-number equal to or larger than 2.8. Additionally or alternatively, the first lens group 102 and the second lens group 104 may be configured such that the optical lens 100 has a diagonal FOV from -40° to +40°. Additionally or alternatively, the first lens group 102 and the second lens group 104 may be configured such that a ratio of a total track length (TTL) to a full image diagonal is equal to or less than 1.3.

In one embodiment, the optical lens 100 may further comprise an aperture stop 108 located between the second aspherical lens element 102-2 and the third aspherical lens element 102-3 in the first lens group 102.

Let us now give one non-restrictive example of how the design of the optical lens 100 may be calculated numerically. In this example, the following calculation formula may be used: $z = \frac{{cr}^{2}}{1 + \sqrt{1 - \left(1+k\right) {c}^{2} {r}^{2}}} + {α}_{1} {r}^{2} + {α}_{2} {r}^{4} + {α}_{3} {r}^{6} + {α}_{4} {r}^{8} + {α}_{5} {r}^{10} + {α}_{6} {r}^{12} + {α}_{7} {r}^{14} + {α}_{8} {r}^{16} ,$ where z is the sag or sagitta, c is the curvature, r is the radial coordinate, k is the conic constant, and α is the n-th even aspheric coefficient. This calculation formula is well-known in the art, for which reason its detailed explanation is omitted herein. By using this calculation formula, one can obtain the following tables of lens design parameters (it should be noted that the Abbe numbers mentioned in Tables 1 and 2 are optimized for the range of wavelengths from 400 nm to 850 nm):

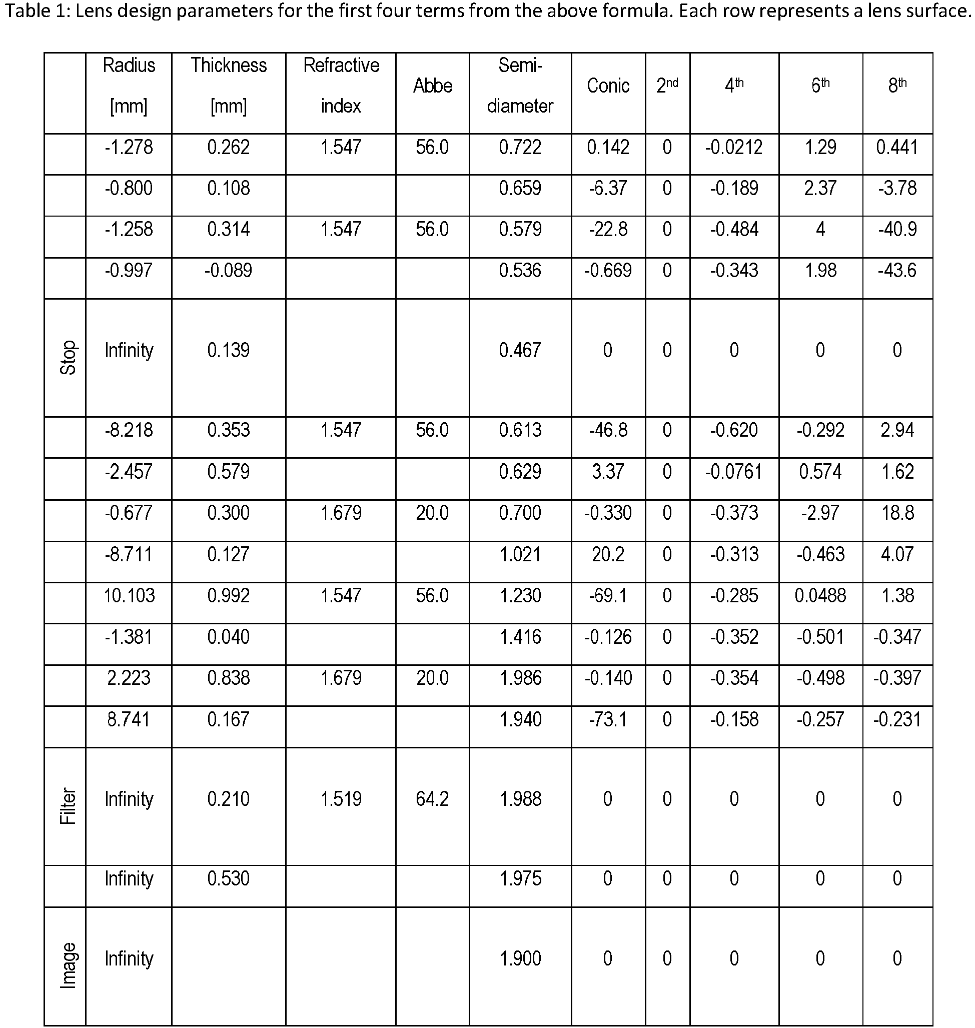

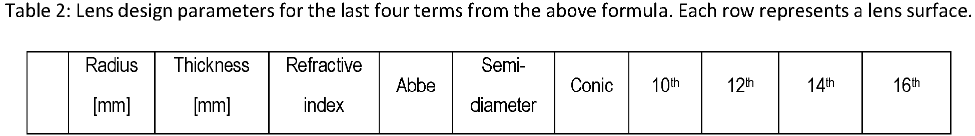

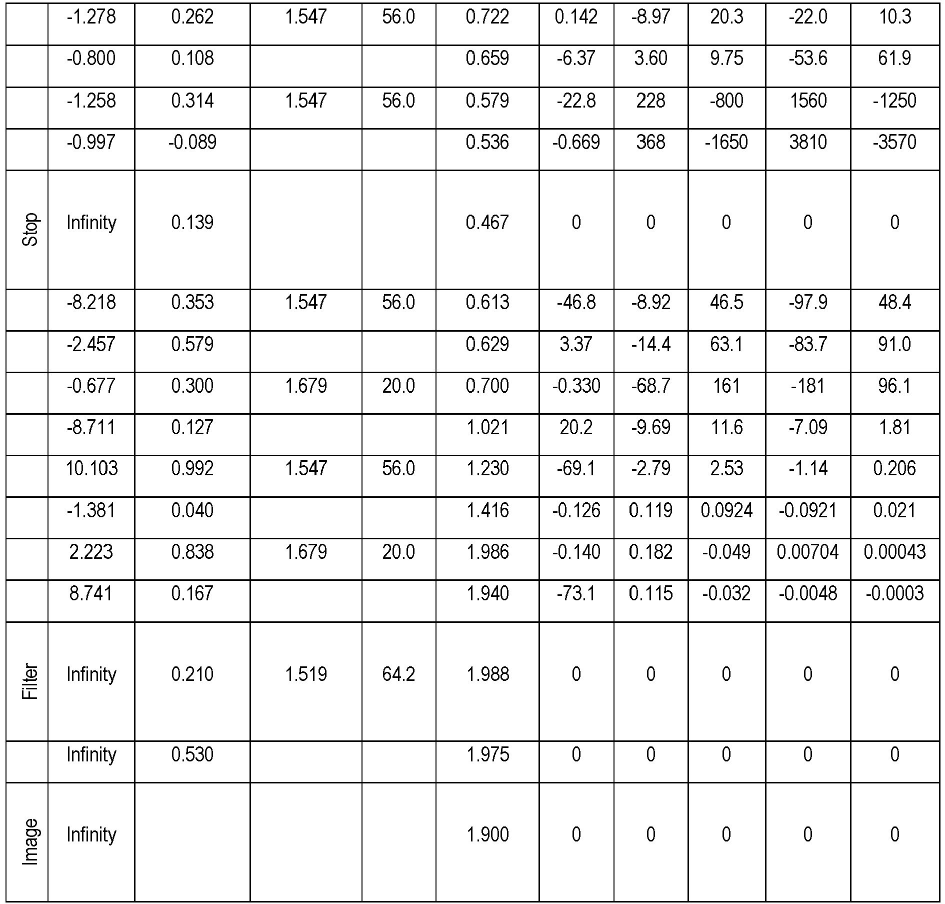

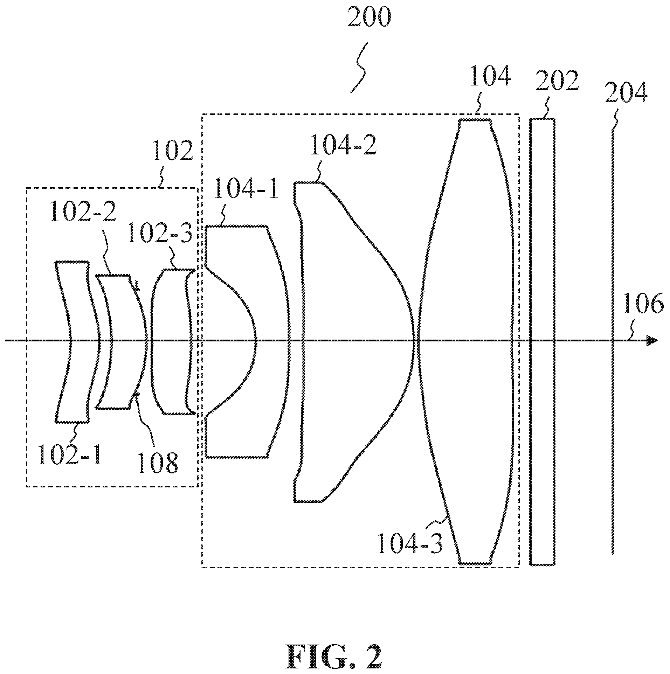

FIG. 2 shows a schematic block diagram of a spectral camera 200 comprising the optical lens 100 in accordance with one exemplary embodiment. The spectral camera 200 further comprises a spectral filter 202 and an image sensor 204. The image sensor 204 is arranged after the optical lens 100 along the optical axis 106 of the optical lens 106, and the spectral filter 202 is arranged between the optical lens 100 and the image sensor 204. The spectral filter 202 may be represented by any one or more color filters. Some examples of color filters may include, but not limited to an absorptive filter, an interference-based filter (e.g., thin-film filter or Fabry-Perot filter), a metasurface color filter, a quantum dot color filter, or any combination thereof. Additionally or alternatively, the spectral camera 200 may further comprise another similar spectral filter (not shown) arranged directly on the image sensor 204.

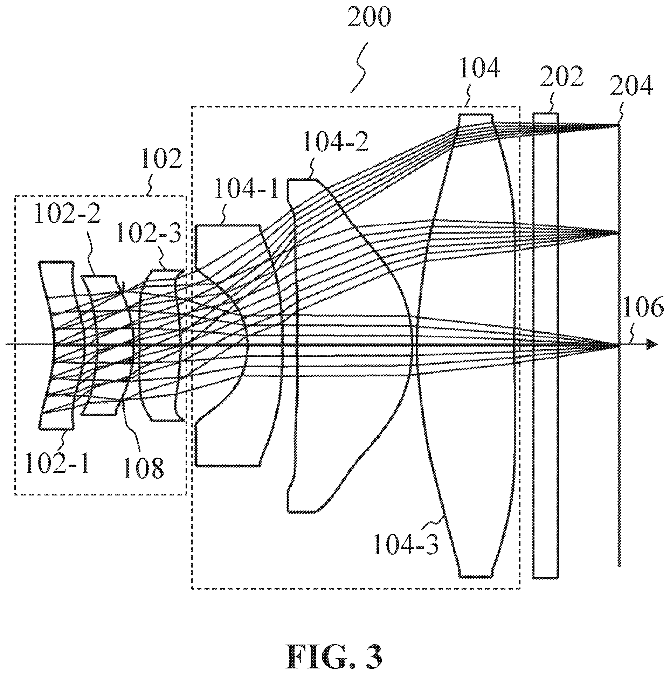

FIG. 3 shows how light rays are refracted by the optical lens 100 in the spectral camera 200. One can see that the chief rays are refracted by the third aspherical lens element 104-3 of the second lens group 104 substantially parallel to the optical axis 106 of the optical lens 100. This confirms that the optical lens 100 is telecentric in the image space.

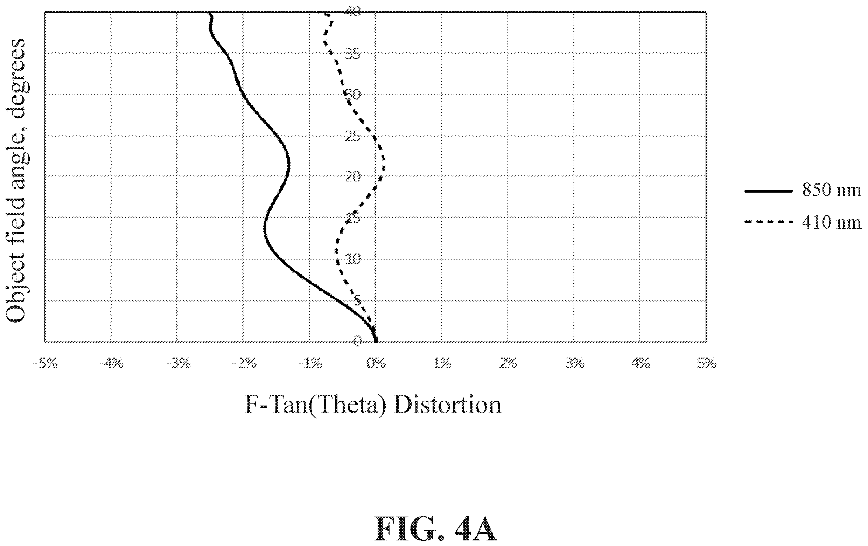

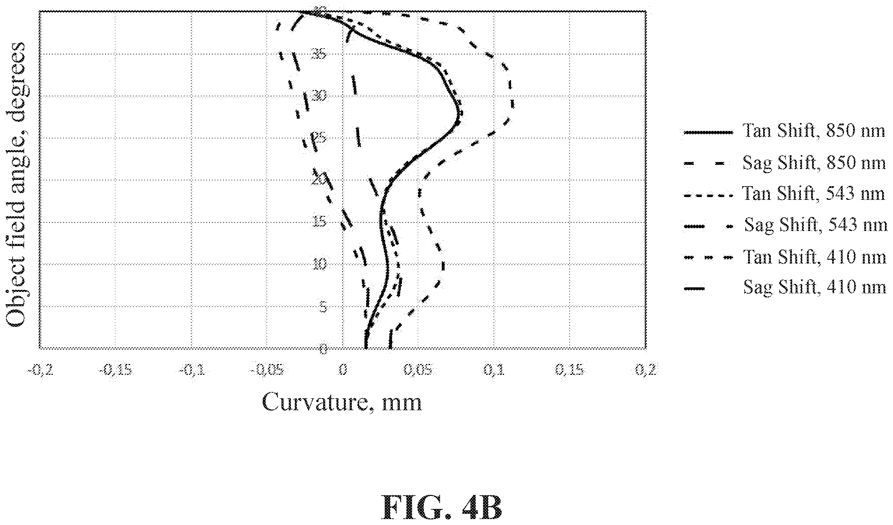

FIGs. 4A-4B show dependences of a F-Tan(Theta) distortion in percent and a field curvature in millimeters on an object field angle for the optical lens 100 at different light wavelengths. More specifically, these dependences have been obtained for the optical lens 100 designed in accordance with the above-given numerical example. In FIG. 4B, the caption "tan (or sag) shift, XXX nm" means that a given dependence or curve is obtained for a tangential (or sagittal) ray at an XXX nm wavelength. The dependences of FIGs. 4A-4B can give a skilled person a clear idea of how the optical lens 100 performs. Ideally, the values of the F-Tan(Theta) distortion and the field curvature are equal to 0 for all values of the object field angle.

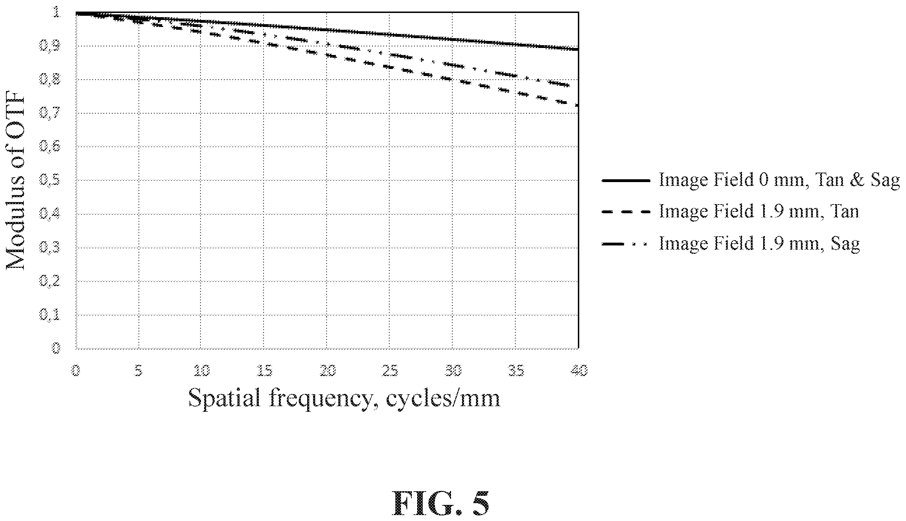

FIG. 5 shows dependences of the modulus of an Optical Transfer Function (OTF) on a spatial frequency in cycles/mm for the optical lens 100 at different Image Field heights in mm. To calculate the OTF, its wavelength dependency between 410 nm and 850 nm and diffraction effects have been taken into account. In FIG. 5, the caption "Image Field XX mm, Tan (and/or Sag)" means that a given curve or dependence is related to a tangential (and/or sagittal) ray for an Image Field height of XX mm. Again, the dependences of FIG. 5 can give a skilled person a clear idea of how well the optical lens 100 performs. Ideally, these dependences follow the diffraction limit of the modulus of the OTF of the optical lens 100.

Although the exemplary embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. An optical lens comprising:
a first lens group (100) arranged along an optical axis of the optical lens (106), the first lens group (102) comprising at least one aspherical lens element; and
a second lens group (104) arranged after the first lens group along the optical axis of the optical lens, the second lens group comprising a first aspherical lens element (102-1), a second aspherical lens element (102-2) and a third aspherical lens element (102-3) which are arranged in sequence along the optical axis of the optical lens, the first aspherical lens element and the second aspherical lens element being configured to correct a chromatic aberration of the optical lens, and the third aspherical lens element being configured to refract chief rays substantially parallel to the optical axis of the optical lens;
wherein the first lens group has a total optical power higher than a total optical power of the second lens group;
wherein the first aspherical lens element has a negative focal length from -1.2 mm to -0.8 mm, a refractive index from 1.60 to 1.75, and an Abbe number from 17 to 25;
wherein the second aspherical lens element has a positive focal length from 2.1 mm to 2.5 mm, a refractive index from 1.50 to 1.60, and an Abbe number from 50 to 60; and
wherein the third aspherical lens element has a positive focal length from 3.8 mm to 4.4 mm, a refractive index from 1.60 to 1.75, and an Abbe number from 15 to 30;
wherein the third aspherical lens is the last lens in the direction of incoming light along the optical axis of the optical lens.

2. The optical lens of claim 1, wherein the first lens group and the second lens group are configured to operate within a range of light wavelengths from 400 nm to 850 nm.

3. The optical lens of claim 1 or 2, wherein the first lens group and the second lens group are configured such that the optical lens has an effective focal length equal to or less than 2.3 mm.

4. The optical lens of any one of claims 1 to 3, wherein the first lens group and the second lens group are configured such that the optical lens has a diagonal field of view from -40° to +40°.

5. The optical lens of any one of claims 1 to 4, wherein the first lens group and the second lens group are configured such that a ratio of a total track length to a full image diagonal is equal to or less than 1.3.

6. The optical lens of any one of claims 1 to 5, wherein the at least one aspherical lens element of the first lens group comprises a first aspherical lens element having a positive focal length from 3 mm to 4 mm, a second aspherical lens element having a positive focal length from 5 mm to 10 mm, and a third aspherical lens element having a positive focal length from 5 mm to 10 mm.

7. The optical lens of claim 6, further comprising an aperture stop located between the second aspherical lens element and the third aspherical lens element in the first lens group.

8. The optical lens of any one of claims 1 to 7, wherein the first lens group and the second lens group are configured such that the optical lens has a f-number equal to or larger than 2.8.

9. A spectral camera (200) comprising:
the optical lens according to any one of claims 1 to 8; and
an image sensor (204) arranged after the optical lens along the optical axis of the optical lens.

10. The spectral camera of claim 9, further comprising a spectral filter (202) arranged between the optical lens and the image sensor.

11. The spectral camera of claim 9 or 10, further comprising a spectral filter arranged directly on the image sensor.

12. The spectral camera of claim 9, wherein the spectral filter comprises at least one color filter.

13. The spectral camera of claim 11, wherein each of the spectral filter arranged between the optical lens and the image sensor and the spectral filter arranged directly on the image sensor comprises at least one color filter.

## Patentansprüche

1. Optische Linse, die umfasst:
eine erste Linsengruppe (100), die entlang einer optischen Achse der optischen Linse (106) angeordnet ist, wobei die erste Linsengruppe (102) mindestens ein asphärisches Linsenelement umfasst; und
eine zweite Linsengruppe (104), die nach der ersten Linsengruppe entlang der optischen Achse der optischen Linse angeordnet ist, wobei die zweite Linsengruppe ein erstes asphärisches Linsenelement (102-1), ein zweites asphärisches Linsenelement (102-2) und ein drittes asphärisches Linsenelement (102-3), die der Reihe nach entlang der optischen Achse der optischen Linse angeordnet sind, umfasst, wobei das erste asphärische Linsenelement und das zweite asphärische Linsenelement konfiguriert sind, um eine chromatische Aberration der optischen Linse zu korrigieren, und das dritte asphärische Linsenelement konfiguriert ist, um Hauptstrahlen im Wesentlichen parallel zu der optischen Achse der optischen Linse zu brechen;
wobei die erste Linsengruppe eine Gesamtbrechkraft, die höher als eine Gesamtbrechkraft der zweiten Linsengruppe ist, aufweist;
wobei das erste asphärische Linsenelement eine negative Brennweite von -1,2 mm bis -0,8 mm, einen Brechungsindex von 1,60 bis 1,75 und eine Abbe-Zahl von 17 bis 25 aufweist;
wobei das zweite asphärische Linsenelement eine positive Brennweite von 2,1 mm bis 2,5 mm, einen Brechungsindex von 1,50 bis 1,60 und eine Abbe-Zahl von 50 bis 60 aufweist; und
wobei das dritte asphärische Linsenelement eine positive Brennweite von 3,8 mm bis 4,4 mm, einen Brechungsindex von 1,60 bis 1,75 und eine Abbe-Zahl von 15 bis 30 aufweist;
wobei die dritte asphärische Linse die letzte Linse in der Richtung eines einfallenden Lichts entlang der optischen Achse der optischen Linse ist.

2. Optische Linse nach Anspruch 1, wobei die erste Linsengruppe und die zweite Linsengruppe konfiguriert sind, um innerhalb eines Bereichs von Lichtwellenlängen von 400 nm bis 850 nm zu arbeiten.

3. Optische Linse nach Anspruch 1 oder 2, wobei die erste Linsengruppe und die zweite Linsengruppe derart konfiguriert sind, dass die optische Linse eine effektive Brennweite von gleich oder kleiner als 2,3 mm aufweist.

4. Optische Linse nach einem der Ansprüche 1 bis 3, wobei die erste Linsengruppe und die zweite Linsengruppe derart konfiguriert sind, dass die optische Linse ein diagonales Sichtfeld von -40° bis +40° aufweist.

5. Optische Linse nach einem der Ansprüche 1 bis 4, wobei die erste Linsengruppe und die zweite Linsengruppe derart konfiguriert sind, dass ein Verhältnis einer Gesamtspurlänge zu einer Vollbilddiagonale gleich oder kleiner als 1,3 ist.

6. Optische Linse nach einem der Ansprüche 1 bis 5, wobei das mindestens eine asphärische Linsenelement der ersten Linsengruppe ein erstes asphärisches Linsenelement, das eine positive Brennweite von 3 mm bis 4 mm aufweist, ein zweites asphärisches Linsenelement, das eine positive Brennweite von 5 mm bis 10 mm aufweist, und ein drittes asphärisches Linsenelement, das eine positive Brennweite von 5 mm bis 10 mm aufweist, umfasst.

7. Optische Linse nach Anspruch 6, die ferner eine Aperturblende, die sich zwischen dem zweiten asphärischen Linsenelement und dem dritten asphärischen Linsenelement in der ersten Linsengruppe befindet, umfasst.

8. Optische Linse nach einem der Ansprüche 1 bis 7, wobei die erste Linsengruppe und die zweite Linsengruppe derart konfiguriert sind, dass die optische Linse eine Blendenzahl gleich oder größer als 2,8 aufweist.

9. Spektralkamera (200), die umfasst:
die optische Linse nach einem der Ansprüche 1 bis 8; und
einen Bildsensor (204), der nach der optischen Linse entlang der optischen Achse der optischen Linse angeordnet ist.

10. Spektralkamera nach Anspruch 9, die ferner ein Spektralfilter (202), das zwischen der optischen Linse und dem Bildsensor angeordnet ist, umfasst.

11. Spektralkamera nach Anspruch 9 oder 10, die ferner ein Spektralfilter, das direkt auf dem Bildsensor angeordnet ist, umfasst.

12. Spektralkamera nach Anspruch 9, wobei das Spektralfilter mindestens ein Farbfilter umfasst.

13. Spektralkamera nach Anspruch 11, wobei jedes von dem Spektralfilter, das zwischen der optischen Linse und dem Bildsensor angeordnet ist, und dem Spektralfilter, das direkt auf dem Bildsensor angeordnet ist, mindestens ein Farbfilter umfasst.

## Revendications

1. Lentille optique comprenant :
un premier groupe de lentilles (100) agencé le long d'un axe optique de la lentille optique (106), le premier groupe de lentilles (102) comprenant au moins un élément de lentille asphérique ; et
un second groupe de lentilles (104) agencé après le premier groupe de lentilles le long de l'axe optique de la lentille optique, le second groupe de lentilles comprenant un premier élément de lentille asphérique (102-1), un deuxième élément de lentille asphérique (102-2) et un troisième élément de lentille asphérique (102-3) qui sont agencés en séquence le long de l'axe optique de la lentille optique, le premier élément de lentille asphérique et le deuxième élément de lentille asphérique étant conçus pour corriger une aberration chromatique de la lentille optique, et le troisième élément de lentille asphérique étant conçu pour réfracter des rayons principaux de manière sensiblement parallèle à l'axe optique de la lentille optique ;
dans laquelle le premier groupe de lentilles a une puissance optique totale supérieure à une puissance optique totale du second groupe de lentilles ;
dans laquelle le premier élément de lentille asphérique a une longueur focale négative allant de -1,2 mm à -0,8 mm, un indice de réfraction allant de 1,60 à 1,75 et un nombre d'Abbe allant de 17 à 25 ;
dans laquelle le deuxième élément de lentille asphérique a une longueur focale positive allant de 2,1 mm à 2,5 mm, un indice de réfraction allant de 1,50 à 1,60 et un nombre d'Abbe allant de 50 à 60 ; et
dans laquelle le troisième élément de lentille asphérique a une longueur focale positive allant de 3,8 mm à 4,4 mm, un indice de réfraction allant de 1,60 à 1,75 et un nombre d'Abbe allant de 15 à 30 ;
dans laquelle la troisième lentille asphérique est la dernière lentille dans la direction de lumière entrante le long de l'axe optique de la lentille optique.

2. Lentille optique selon la revendication 1, dans laquelle le premier groupe de lentilles et le second groupe de lentilles sont conçus pour fonctionner dans une plage de longueurs d'onde de lumière allant de 400 nm à 850 nm.

3. Lentille optique selon la revendication 1 ou 2, dans laquelle le premier groupe de lentilles et le second groupe de lentilles sont conçus de telle sorte que la lentille optique a une longueur focale effective égale ou inférieure à 2,3 mm.

4. Lentille optique selon l'une quelconque des revendications 1 à 3, dans laquelle le premier groupe de lentilles et le second groupe de lentilles sont conçus de telle sorte que la lentille optique a un champ de vision diagonal allant de -40° à +40°.

5. Lentille optique selon l'une quelconque des revendications 1 à 4, dans laquelle le premier groupe de lentilles et le second groupe de lentilles sont conçus de telle sorte qu'un rapport entre une longueur totale de course et une diagonale d'image complète est égal ou inférieur à 1,3.

6. Lentille optique selon l'une quelconque des revendications 1 à 5, dans laquelle l'au moins un élément de lentille asphérique du premier groupe de lentilles comprend un premier élément de lentille asphérique ayant une longueur focale positive allant de 3 mm à 4 mm, un deuxième élément de lentille asphérique ayant une longueur focale positive allant de 5 mm à 10 mm, et un troisième élément de lentille asphérique ayant une longueur focale positive allant de 5 mm à 10 mm.

7. Lentille optique selon la revendication 6, comprenant en outre un diaphragme d'ouverture situé entre le deuxième élément de lentille asphérique et le troisième élément de lentille asphérique dans le premier groupe de lentilles.

8. Lentille optique selon l'une quelconque des revendications 1 à 7, dans laquelle le premier groupe de lentilles et le second groupe de lentilles sont conçus de telle sorte que la lentille optique a une ouverture égale ou supérieure à 2,8.

9. Caméra spectrale (200) comprenant :
la lentille optique selon l'une quelconque des revendications 1 à 8 ; et
un capteur d'image (204) agencé après la lentille optique le long de l'axe optique de la lentille optique.

10. Caméra spectrale selon la revendication 9, comprenant en outre un filtre spectral (202) agencé entre la lentille optique et le capteur d'image.

11. Caméra spectrale selon la revendication 9 ou 10, comprenant en outre un filtre spectral agencé directement sur le capteur d'image.

12. Caméra spectrale selon la revendication 9, dans laquelle le filtre spectral comprend au moins un filtre de couleur.

13. Caméra spectrale selon la revendication 11, dans laquelle chacun du filtre spectral agencé entre la lentille optique et le capteur d'image et du filtre spectral agencé directement sur le capteur d'image comprend au moins un filtre de couleur.
